# EUROPÄISCHE PATENTSCHRIFT

(11) **EP 3 854 529 B1**
(45) Veröffentlichungstag und Bekanntmachung des Hinweises auf die Patenterteilung: **06.03.2024**
(21) Anmeldenummer: 21153247.8
(22) Anmeldetag: 25.01.2021
(51) Int. Cl.: B25B 23/18, F21V 33/00, B23D 59/00

(54) **HANDWERKZEUGMASCHINE**
HAND MACHINE TOOL
MACHINE-OUTIL PORTATIVE

(30) Priorität: 27.01.2020 DE 102020101839
(43) Veröffentlichungstag der Anmeldung: 28.07.2021
(73) Patentinhaber: Mafell AG, 78727 Oberndorf a.N. (DE)
(72) Erfinder: Lunze, Stefan, 78727 Oberndorf a.N. (DE); Maier, Andreas, 78737 Fluorn-Winzeln (DE)
(74) Vertreter: Manitz Finsterwald Patent- und Rechtsanwaltspartnerschaft mbB

(56) Entgegenhaltungen:
- DE-A1-102009 035 134
- DE-A1-102015 218 447
- US-B2- 8 242 715
- US-B2- 9 795 009

## Beschreibung

Die Erfindung betrifft eine Handwerkzeugmaschine, beispielsweise eine Stichsäge, eine Bohrmaschine, eine Kreissäge oder eine Oberfräse, mit einem Werkzeug, insbesondere einem Sägeblatt, einem Bohrer oder einem Fräser, und einem Elektromotor zum Antreiben des Werkzeugs, und mit einem an der Maschine angebrachten Lichtmodul, das wenigstens eine Lichtquelle zum Beleuchten eines Arbeitsbereiches aufweist.

Derartige Handwerkzeugmaschinen, die auch als Elektrowerkzeuge bezeichnet werden, sind grundsätzlich bekannt. In der Praxis ist es häufig nicht gewünscht, dass die Lichtquelle immer eingeschaltet ist, wenn mit der Maschine gearbeitet wird. Mit Stichsägen beispielsweise wird häufig in einer um 180° gedrehten Orientierung, also gewissermaßen überkopf, gearbeitet, d.h. die Maschine wird mit ihrer Grundplatte von unten an das zu bearbeitende Werkstück oder an einen Arbeitstisch angelegt. Eine solche Haltung der Maschine wird in der Praxis auch als "Unter dem Tisch" bezeichnet. Bei einer derartigen "gedrehten" Orientierung ist eine Beleuchtung des Arbeitsbereiches nicht erforderlich oder unerwünscht. Vielmehr würde die eingeschaltete Lichtquelle den Benutzer blenden können.

Generell gibt es also beim Arbeiten mit Handwerkzeugmaschinen Situationen, in denen eine eingeschaltete Lichtquelle als störend empfunden wird. Es muss also möglich sein, die Lichtquelle gezielt einzuschalten und auszuschalten. Hierzu wäre es möglich, die Maschinen mit herkömmlichen physikalischen Schaltern auszustatten. Derartige physikalische Schalter erhöhen allerdings die Herstellungskosten und neigen zur Verschmutzung.

DE 10 2009 035 134 A1 offenbart eine Handwerkzeugmaschine, nach dem Oberbegriff von Anspruch 1 die eine Beleuchtungseinrichtung aufweist, deren Betriebsmodus durch ein von einem Lagesensor ausgegebenen Lagesignal verändert wird. Aus DE 10 2015 218 447 A1 ist ein Ackupack für eine Handwerkzeugmaschine bekannt, welcher einen Beschleunigungssensor zum Aktivieren eines variablen Signals aufweist.

Aufgabe der Erfindung ist es, eine Handwerkzeugmaschine der eingangs genannten Art zu schaffen, die möglichst kostengünstig herstellbar und eine einfache und zuverlässige Betätigung des Lichtmoduls gestattet.

Die Lösung dieser Aufgabe erfolgt durch die Merkmale des Anspruchs 1. Insbesondere ist erfindungsgemäß vorgesehen, dass das Lichtmodul für eine Gestensteuerung ausgebildet ist und die Maschine eine programmierbare Steuereinheit umfasst, die zur Erkennung von Gesten und zur Ansteuerung des Lichtmoduls in Abhängigkeit von erkannten Gesten ausgebildet ist, wobei die Steuereinheit dazu ausgebildet ist, ein ein- oder mehrmaliges Schlagen oder Klopfen auf die Außenseite des Gehäuses als Geste zum Ansteuern des Lichtmoduls und somit zum Verändern des Zustands der Lichtquelle des Lichtmoduls zu erkennen.

Erfindungsgemäß kann folglich durch eine Gestensteuerung der Zustand der Lichtquelle verändert werden, die Lichtquelle z.B. eingeschaltet oder ausgeschaltet werden oder z.B. der Bruchteil der maximalen Lichtstärke, auf den die Lichtquelle gedimmt ist, verändert werden, indem das Lichtmodul durch Gestensteuerung angesteuert wird. Das Lichtmodul ist also insofern für eine Gestensteuerung ausgebildet als durch diese der Zustand der Lichtquelle verändert werden kann. Wenn das Lichtmodul mehrere Lichtquellen aufweist, können diese jeweils in gleicher Weise ihren Zustand durch die Gestensteuerung verändern, oder die Gestensteuerung kann selektiv - in Abhängigkeit von der jeweiligen Geste - nur auf eine Lichtquelle oder nur auf einen Teil der Lichtquellen zustandsverändernd wirken.

Durch die erfindungsgemäße Gestensteuerung entfällt die Notwendigkeit für einen physikalischen Schalter zum Betätigen des Lichtmoduls und damit der Lichtquelle. Erforderlich ist lediglich eine Sensorik zur Erkennung einer oder mehrerer vorgegebener Gesten sowie eine entsprechende Software zur Analyse und Verarbeitung der von der Sensorik kommenden Daten oder Signale. Gestensteuerungen sind grundsätzlich bekannt, beispielsweise bei Mobiltelefonen und im Automobilbereich. Geeignete Sensorik und Software stehen dem Fachmann somit zur Verfügung. Auf dem Gebiet der Handwerkzeugmaschinen ist das Konzept der Gestensteuerung allerdings bislang völlig unbekannt.

Die erfindungsgemäße Gestensteuerung führt zu einer relevanten Reduzierung der Herstellungskosten, da keine physikalischen Schalter mehr verbaut werden müssen. Gleichzeitig ist eine zuverlässige Betätigung des Lichtmoduls sichergestellt. Zudem kann das Konzept der Gestensteuerung die Funktionalität erhöhen, indem Gesten und Betriebszustände logisch miteinander verknüpft werden. Beispielsweise kann die Steuerung so programmiert sein, dass das Einschalten der Lichtquelle durch eine bestimmte Geste nur dann möglich ist, wenn der Elektromotor der Maschine ausgeschaltet ist und sich die Maschine in der gedrehten Orientierung "Unter dem Tisch" befindet.

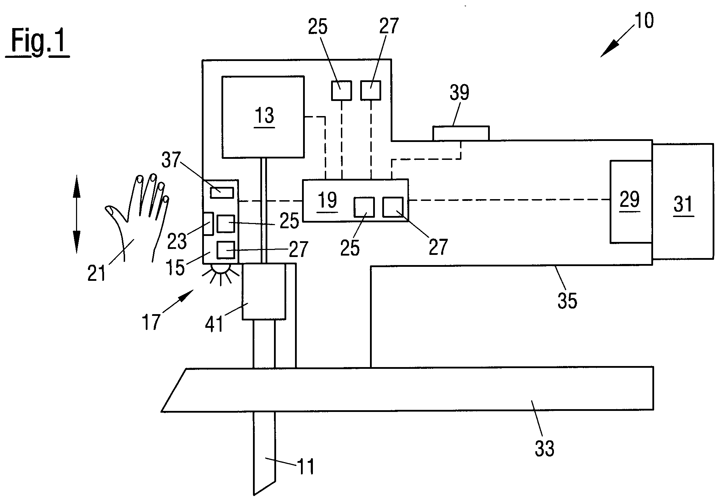

Vorteilhafte Ausführungsformen der Erfindung sind auch in den abhängigen Ansprüchen, der Zeichnung sowie der nachfolgenden Beschreibung angegeben.

In einigen Ausführungsformen kann vorgesehen sein, dass durch die Gestensteuerung die Lichtquelle einschaltbar und ausschaltbar ist. Alternativ oder zusätzlich kann vorgesehen sein, dass durch die Gestensteuerung die Lichtquelle dimmbar ist. Für das Dimmen können beispielsweise unterschiedliche Gesten für unterschiedliche Lichtintensitäten vorgegeben sein. Alternativ kann nur eine einzige reduzierte Intensität vorgegeben sein, die beispielsweise 15% der maximalen Intensität entspricht.

Des Weiteren kann in manchen Ausführungsformen vorgesehen sein, dass die Steuereinheit in das Lichtmodul integriert oder separat von dem Lichtmodul an der Maschine angeordnet ist. Insbesondere kann die Steuereinheit von einer Steuereinheit des Lichtmoduls gebildet sein, welche auch andere Funktionen des Lichtmoduls übernimmt, die mit der Gestensteuerung nichts zu tun haben. Die Funktionalität zur Gestensteuerung oder zur Erkennung von Gesten kann dabei beispielsweise durch eine entsprechende zusätzliche oder modifizierte Software realisiert werden. Insbesondere ist es möglich, die Erfindung dadurch umzusetzen, dass existierende Lichtmodule lediglich neu programmiert zu werden brauchen. Existierende "Hardware" kann weiterhin verwendet werden. Eine komplette hardware-mäßige Neuentwicklung eines Lichtmoduls ist somit nicht zwingend erforderlich, um die Erfindung nutzen zu können. Die Steuereinheit umfasst vorzugsweise einen Mikroprozessor und einen Speicher oder einen Mikrocontroller.

Bei einigen Ausführungsformen kann die Steuereinheit zur Erkennung einer oder mehrerer unterschiedlicher Gesten in Form von Bewegungen eines Körperteils eines Menschen relativ zur Maschine und/oder in Form von Bewegungen der ganzen Maschine im Raum und/oder in Form von Beschleunigungen der Maschine und/oder in Form von mechanischen Schwingungen, insbesondere Schallwellen, ausgebildet sein.

Bei den Beschleunigungen der Maschine kann es sich z.B. um solche handeln, die durch mechanische Einwirkungen auf einen oder mehrere äußere Bestandteile der Maschine hervorgerufen werden können. Bei den mechanischen Einwirkungen kann es sich beispielsweise um Stöße oder Schläge handeln, z.B. um ein Klopfen auf das Maschinengehäuse mit der Hand des Benutzers oder mit einem Gegenstand. So kann z.B. der Benutzer die Lichtquelle einfach dadurch einschalten oder ausschalten, allgemein also deren Zustand ändern, indem er mit seiner flachen Hand oder mit der Faust oder mit einem Gegenstand, den er gerade zufällig oder gezielt zu diesem Zweck in der Hand hält, gegen die Maschine klopft oder schlägt. Um ein versehentliches Ein- oder Ausschalten der Lichtquelle zu verhindern, kann vorgesehen sein, dass die Steuereinheit als Geste ein bestimmtes Muster erwartet, z.B. ein zweimaliges Klopfen mit einem bestimmten zeitlichen Abstand zwischen den beiden Klopfvorgängen - ähnlich wie beim Doppelklick mit einer Computermaus. Dieses Muster, insbesondere die Empfindlichkeit der Maschine für diese Art von Gestensteuerung, kann einstellbar sein, indem z.B. die erforderliche Intensität eines Klopfvorgangs und/oder die erforderliche Zeitspanne zwischen zwei aufeinanderfolgenden Klopfvorgängen eingestellt werden kann.

Derartige mechanische Einwirkungen, insbesondere Schläge oder Stöße, die insbesondere durch Klopfen auf das Maschinengehäuse hervorgerufenen werden können, stellen physikalisch betrachtet Stöße dar, die zu kurzzeitigen Beschleunigungen der Maschine führen und folglich mittels eines Beschleunigungssensors erfasst werden können.

Grundsätzlich ist es auch möglich, derartige mechanische Einwirkungen mittels eines solchen Sensors zu erkennen, der mechanische Schwingungen, insbesondere Schallwellen, detektieren kann. Wenn die Maschine hierzu ausgebildet und der Sensor an einer hierzu geeigneten Stelle an oder in der Maschine angeordnet ist, dann kann der Umstand ausgenutzt werden, dass mechanische Einwirkungen wie z.B. ein Klopfen auf das Maschinengehäuse mechanische Schwingungen, insbesondere Schallwellen, erzeugen können, die sich innerhalb von Bauteilen der Maschine und/oder durch in Hohlräumen der Maschine vorhandene Luft ausbreiten und von einem geeigneten Sensor erfasst werden können. Der Sensor kann ein akustischer Sensor sein, insbesondere ein Schallwandler für Luftschall, insbesondere also ein Mikrofon, oder ein Schallwandler für Körperschall.

Gesten in Form von mechanischen Einwirkungen können also durch einen Beschleunigungssensor oder durch einen akustischen Sensor erfasst werden. Ein akustischer Sensor kann auch dazu vorgesehen sein, ohne mechanische Einwirkung auf die Maschine erzeugte Schallwellen zu erfassen, so dass die Steuereinheit Gesten auch in Form von Schallwellen erfassen kann, die der Benutzer auf andere Weise als durch Klopfen oder Schlagen auf die Maschine erzeugt, z.B. durch mehrfaches Schlagen mit der Hand oder einem Werkzeug auf ein Werkstück oder auf einen anderen Gegenstand oder durch Hervorrufen von Geräuschen mittels seines Körpers, beispielsweise durch Schnalzen mit der Zunge oder mit den Fingern. Generell muss also beim Ausführen einer Geste die Maschine nicht unbedingt mit einbezogen werden, d.h. Bewegungen oder Beschleunigungen der Maschine sind für die erfindungsgemäße Gestensteuerung möglich, aber nicht zwingend.

Damit die Steuereinheit dazu ausgebildet ist, ein ein- oder mehrmaliges Schlagen oder Klopfen auf die Außenseite eines Gehäuses der Maschine als Geste zum Ansteuern des Lichtmoduls und somit zum Verändern des Zustands der Lichtquelle des Lichtmoduls zu erkennen, umfasst die Steuereinheit bevorzugt einen Beschleunigungssensor, der dieses Schlagen oder Klopfen erfassen kann.

Bei den Gesten zur Steuerung des Lichtmoduls muss es sich also nicht zwingend um Bewegungen eines Körperteils, also beispielsweise um Handbewegungen oder Fingerbewegungen eines Benutzers, handeln. Es ist auch möglich, bestimmte Bewegungen der Maschine als Ganzes im Raum als Gesten zu definieren. So können beispielsweise bestimmte Bewegungen der Maschine oder Bewegungsmuster vorgegeben sein, die bei einem normalen Arbeiten mit der Maschine nie auftreten und so als Gesten erkannt werden können, wenn der Benutzer sie ausführt. Ein Bewegungsmuster kann beispielsweise das wiederholte, z.B. zweimalige Ausführen einer bestimmten Bewegung der Maschinen innerhalb eines vorgegebenen Zeitfensters umfassen. Alternativ oder zusätzlich kann beispielsweise das Überführen der Maschine von der normalen aufrechten Stellung in die erwähnte gedrehte Stellung "Unter dem Tisch" als eine Geste erkannt werden und zum Ausschalten der Lichtquelle führen. Wenn Bewegungen der Maschine zur Gestensteuerung verwendet werden, hat dies den Vorteil, dass der Benutzer nicht seine Hand oder einen Finger in die Nähe eines an der Maschine angebrachten, z.B. optischen Gestensensors, bringen muss, was prinzipiell ein Verletzungsrisiko bedeuten könnte. Auch kann so auf einen zusätzlichen Gestensensor verzichtet werden, wenn eine bereits existierende Maschine z.B. in einem bereits vorhandenen Lichtmodul einen Beschleunigungssensor aufweist, der dazu dient, ein längeres Ruhen der Maschine oder eine beginnende Bewegung der Maschine nach einer Ruhephase zu erkennen, um eine Lichtquelle aus- bzw. einzuschalten. Durch eine Neu- oder Umprogrammierung des Lichtmoduls bzw. einer Steuereinheit der Maschine kann dieser Beschleunigungssensor für eine erfindungsgemäße Gestensteuerung eingesetzt werden. Manche bereits existierenden Maschinen können so lediglich durch Anpassen der Software mit der erfindungsgemäßen Gestensteuerung nachgerüstet werden.

In einigen Ausführungsformen kann vorgesehen sein, dass die Steuereinheit zur Erkennung unterschiedlicher Lagen der Maschine im Raum ausgebildet ist.

Eine bestimmte Lage der Maschine im Raum kann Bestandteil einer vorgegebenen Geste sein. Alternativ oder zusätzlich ist es aber auch möglich, die Lage der Maschine im Raum und damit vorgegebene Betriebszustände zu definieren, die mit der Gestensteuerung logisch verknüpft werden können.

In einigen Ausführungsformen kann vorgesehen sein, dass die Maschine zumindest einen Sensor zur Gesten- und/oder Lageerkennung umfasst. Der Sensor kann beispielsweise in das Lichtmodul oder in die Steuereinheit integriert sein. Es ist aber auch möglich, den Sensor an einer grundsätzlich beliebigen anderen Stelle der Maschine anzuordnen, beispielsweise an der Außenseite eines Maschinengehäuses oder innerhalb des Gehäuses.

Bei dem Sensor kann es sich beispielsweise um einen Gestensensor, einen Lagesensor, einen Bewegungssensor oder einen Beschleunigungssensor handeln. Letzterer kann insbesondere dazu dienen, mit der Maschine ausgeführte Bewegungen als Gesten zu erkennen oder eine solche Erkennung zu unterstützen, und insofern ebenfalls einen Gestensensor darstellen. Als Gestensensor kann aber grundsätzlich auch ein optischer Sensor eingesetzt werden, um z.B. Hand- oder Fingerbewegungen relativ zur Maschine zu erkennen. Auch ein Bewegungssensor oder eine Kombination aus wenigstens zwei gleichartigen oder verschiedenen Sensoren kann als Gestensensor eingesetzt werden. Es ist auch möglich, unterschiedliche Lagen der Maschine, die diese nacheinander innerhalb einer bestimmten Zeitspanne einnimmt, als eine Bewegung zu identifizieren und so als eine Geste zu werden und für eine Gestensteuerung zu nutzen. Folglich kann auch ein Lagesensor einen Gestensensor darstellen.

Nicht als Beschleunigungssensoren ausgebildete Gestensensoren sind dem Fachmann grundsätzlich bekannt und in vielfältiger Form am Markt erhältlich. Gestensensoren können beispielsweise berührungslos, insbesondere optisch, arbeiten. Ein derartiger Gestensensor kann beispielsweise eine oder mehrere Infrarot-Lichtquellen aufweisen und dazu ausgebildet sein, reflektierte Infrarot-Strahlung zu analysieren und auf das Ereignis, das zur Reflexion der Strahlung geführt hat, zu schließen und in einer durch die Programmierung vorgegebenen Weise auf dieses Ereignis zu reagieren. Derartige Sensoren können beispielsweise unterschiedliche Handbewegungen in der Nähe des Sensors erkennen und hinsichtlich der Bewegungsrichtung unterscheiden. So können derartige Sensoren beispielsweise unterscheiden, ob eine Handbewegung von links nach rechts, von rechts nach links, von oben nach unten, von unten nach oben, auf den Sensor zu oder vom Sensor weg erfolgt. In Abhängigkeit von diesen unterschiedlichen Bewegungen können dann unterschiedliche Funktionen ausgeführt werden.

Alternativ kann der Gestensensor berührungsempfindlich sein und z.B. einen Touchscreen oder eine andere berührungsempfindliche Einrichtung umfassen, um beispielsweise vorgegebene Wischbewegungen zu erkennen.

Bevorzugt kann vorgesehen sein, dass die Maschine eine Mehrzahl von unterschiedlichen Sensoren zur Gesten- und/oder Lageerkennung umfasst, wobei diese Sensoren vorzugsweise jeweils in das Lichtmodul oder in die Steuereinheit integriert sind.

Die Maschine kann beispielsweise einen oder mehrere Gestensensoren, einen oder mehrere Lagesensoren sowie einen oder mehrere Beschleunigungssensoren umfassen, um auf diese Weise bestimmte Bewegungen eines Körperteils eines Menschen relativ zur Maschine, bestimmte Lagen der Maschine im Raum sowie bestimmte Bewegungen der ganzen Maschine im Raum zu erkennen und für die Gestensteuerung zu nutzen.

Bei einigen Ausführungsformen kann die Maschine einen Steckplatz für eine entnehmbare wiederaufladbare Batterie, insbesondere einen Akkupack, aufweisen. Eine derartige Ausgestaltung ist allerdings nicht zwingend. Die Erfindung ist auch in Verbindung mit Handwerkzeugmaschinen einsetzbar, die für einen Netzbetrieb ausgelegt sind. Bei akkubetriebenen Maschinen können diesbezügliche Informationen in die Gestensteuerung mit einbezogen werden. So kann beispielsweise eine Gestensteuerung unterbunden sein, wenn kein Akku eingesteckt oder ein eingesteckter Akku leer ist.

Generell kann in einigen Ausführungsformen vorgesehen sein, dass die Steuereinheit dazu ausgebildet ist, in Abhängigkeit von einem jeweiligen Betriebszustand der Maschine die Gestensteuerung generell entweder zu ermöglichen oder zu unterbinden oder die Gestensteuerung auf eine oder mehrere vorgegebene oder vorgebbare Gesten zu beschränken.

Ferner kann bei einigen Ausführungsformen das Lichtmodul dazu ausgebildet sein, einen durch Gestensteuerung eingestellten Beleuchtungszustand zu speichern, solange die Maschine mit einem Stromnetz verbunden und/oder eine wiederaufladbare Batterie an die Maschine angesteckt ist, und in einen vorgegebenen oder vorgebbaren Ausgangszustand zurückzukehren, sobald die Maschine von dem Stromnetz getrennt und/oder die wiederaufladbare Batterie entfernt wird.

Beispielsweise kann durch das Zurückkehren in den Ausgangszustand dafür gesorgt werden, dass alle zuvor durch die Gestensteuerung eingestellten Funktionen rückgängig gemacht werden und die Maschine in einen "Normalmodus" zurücckehrt, der sich beispielsweise dadurch auszeichnet, dass bei normaler Orientierung der Maschine "Über dem Tisch" die Lichtquelle eingeschaltet und bei um 180° gedrehter Orientierung der Maschine "Unter dem Tisch" ausgeschaltet ist.

Des Weiteren kann in einigen Ausführungsformen die Steuereinheit dazu ausgebildet sein, als Betriebszustand jeweils zu erkennen, ob die Maschine eine vorgegebene oder vorgebbare Lage im Raum einnimmt, ob der Elektromotor eingeschaltet oder ausgeschaltet ist, ob die Maschine mit einem Stromnetz verbunden oder von dem Stromnetz getrennt ist, und/oder ob eine wiederaufladbare Batterie an die Maschine angesteckt oder entfernt ist.

Die Programmierung der Maschine kann dazu ausgebildet sein, bestimmte Betriebszustände, die die Maschine erkennen kann, mit erkannten Gesten zu verknüpfen.

Die Erfindung betrifft außerdem ein Verfahren zum Ansteuern eines Lichtmoduls einer Handwerkzeugmaschine wie hierin offenbart, bei dem das Lichtmodul durch eine oder mehrere unterschiedliche Gesten in Form von Bewegungen eines Körperteils eines Menschen relativ zur Maschine und/oder in Form von Bewegungen der ganzen Maschine im Raum angesteuert wird.

Des Weiteren betrifft die Erfindung die Verwendung einer Gestensteuerung zum Ansteuern eines Lichtmoduls einer Handwerkzeugmaschine wie hierin offenbart.

Durch die Erfindung wird eine intelligente Handwerkzeugmaschine mit hoher Funktionalität geschaffen, die eine einfache, intuitive und zuverlässige Bedienung ermöglicht und keine zusätzliche teure Hardware benötigt, sondern aufgrund der Einsparung von Bauteilen sogar zu einer Reduzierung der Herstellungskosten führt.

Die Erfindung wird im Folgenden beispielhaft unter Bezugnahme auf die Zeichnung beschrieben, deren einzige Figur schematisch eine erfindungsgemäße Handwerkzeugmaschine in Form einer Stichsäge zeigt. Andere erfindungsgemäße Handwerkzeugmaschinen sind ebenfalls möglich, beispielsweise Bohrmaschinen, Kreissägen oder Oberfräsen.

Die schematisch dargestellte Handwerkzeugmaschine 10 ist eine Stichsäge, die eine Grundplatte 33 und ein fest oder lösbar mit der Grundplatte 33 verbundenes Maschinenteil mit einem Gehäuse 35 umfasst.

Im Gehäuse 35 sind unter anderem ein Elektromotor 13, ein Lichtmodul 15 sowie eine Steuereinheit 19 untergebracht. Der Elektromotor 13 kann mittels eines Schalters 39 eingeschaltet und ausgeschaltet werden und dient in bekannter Weise dazu, im Sinne einer periodischen Auf- und Abbewegung eine Werkzeugaufnahme 41 anzutreiben, in die ein Werkzeug 11 in Form eines Sägeblatts auswechselbar eingesetzt ist.

Das Lichtmodul 15 weist eine Lichtquelle 17, beispielsweise eine oder mehrere LEDs, auf, die so ausgebildet und angeordnet ist, dass ein Arbeitsbereich beleuchtet wird, an welchem mit dem Sägeblatt 11 ein hier nicht dargestelltes Werkstück bearbeitet wird.

Das Lichtmodul 15 ist vorzugsweise gekapselt oder vergossen und so vor äußeren Einflüssen, insbesondere Verschmutzungen, geschützt.

Während der Werkstückbearbeitung liegt die Stichsäge 10 mit der Unterseite ihrer Grundplatte 33 beispielsweise auf einer Führungsschiene oder unmittelbar auf dem Werkstück auf. In der Praxis wird mit einer derartigen Stichsäge nicht nur in der normaleren Orientierung, wie hier dargestellt, gearbeitet, bei der die Grundplatte 33 mit ihrer Unterseite der Oberseite eines Werkstücks zugewandt ist, sondern auch in einer um 180° gedrehten Orientierung, in der die Grundplatte 33 mit ihrer Unterseite der Unterseite eines Werkstücks zugewandt ist und die auch als "Überkopf"-Orientierung oder als Orientierung "Unter dem Tisch" bezeichnet wird. Die erwähnte Normalorientierung wird auch als Orientierung "Auf dem Tisch" bezeichnet.

Zur Unterscheidung zwischen diesen beiden Orientierungen und generell zur Erkennung der Lage der Maschine 10 im Raum dienen Lagesensoren 25. Ein Lagesensor 25 ist in die Steuereinheit 19 integriert. Ein anderer Lagesensor 25 ist an einer anderen Stelle im Gehäuse 35 angeordnet und mit der Steuereinheit 19 verbunden. Ein weiterer Lagesensor 25 ist in das Lichtmodul 15 integriert. In einer alternativen Ausgestaltung kann nur einer dieser Lagesensoren 25 vorgesehen sein. Lagesensoren sind dem Fachmann grundsätzlich bekannt und auf dem Markt in vielfältiger Ausgestaltung erhältlich.

Dies gilt auch für die an der Maschine 10 vorgesehenen Beschleunigungssensoren 27. Wie die Darstellung zeigt, kann ein Beschleunigungssensor 27 wiederum in die Steuereinheit 19 integriert sein. Alternativ oder zusätzlich kann ein Beschleunigungssensor 27 an einer anderen Stelle im Gehäuse 35 angeordnet und mit der Steuereinheit 19 verbunden sein. Ein Beschleunigungssensor 27 kann auch in das Lichtmodul 15 integriert sein.

Die Sensoren 25, 27 können dadurch in das Lichtmodul 15 integriert sein, dass die Steuereinheit 19 einen Bestandteil des Lichtmoduls 15 bildet.

Die dargestellte Anzahl sowie Anordnung dieser Sensoren 25, 27 sind lediglich als Beispiel zu verstehen. Insbesondere je nach gewünschter Funktionalität der erfindungsgemäßen Maschine 10 können Anzahl und Anordnung von Lagesensoren und Beschleunigungssensoren variieren.

Die Steuereinheit 19 ist außerdem mit dem erwähnten Schalter 39 und dem Elektromotor 13 verbunden. Des Weiteren ist die Steuereinheit 19 mit einem Steckplatz 29 verbunden, der in grundsätzlich bekannter Weise die erforderlichen Anschlüsse für eine auch als Akkupack bezeichnete wiederaufladbare Batterie 31 besitzt, die hier im an die Maschine 10 angesteckten Zustand dargestellt und zum Aufladen an einer nicht dargestellten Ladestation entfernt werden kann.

Die Steuereinheit 19 ist dazu ausgebildet, das Vorhandensein und den Ladezustand eines angesteckten Akkupacks 31 zu erkennen. Ferner ist die Steuereinheit 19 dazu ausgebildet, den Elektromotor 13 sowie das Lichtmodul 15 anzusteuern. In einer alternativen Ausgestaltung kann die Steuereinheit 19 in das Lichtmodul 15 integriert sein. Alternativ ist es auch möglich, dass das Lichtmodul 15 eine eigene, zusätzlich zur Steuereinheit 19 der Maschine 10 vorgesehene Steuereinheit besitzt, die mit der Steuereinheit 19 der Maschine 10 kommuniziert.

Die Steuereinheit 19, die - wie bereits erwähnt - abweichend von der Darstellung in der Figur auch in das Lichtmodul 15 integriert oder von dem Lichtmodul 15 gebildet werden kann - ist mit einem Prozessor und einem Speicher versehen (jeweils nicht dargestellt), in dem eine Software, insbesondere eine Firmware, gespeichert ist, die unter anderem derart programmiert ist, dass die Maschine 10 und insbesondere das Lichtmodul 15 auf der Basis einer nachstehend näher erläuterten Gestensteuerung und in Abhängigkeit von bestimmten Betriebszuständen, welche die Steuereinheit 19 erkennen kann, angesteuert und somit betrieben werden kann.

Das Lichtmodul 15 ist zusätzlich zu der bereits erwähnten Lichtquelle 17 mit einem optischen Gestensensor 23 und einer Speichereinheit 37 versehen. Die erwähnte Software kann ganz oder teilweise in dieser Speichereinheit 37 des Lichtmoduls 15 gespeichert sein. Alternativ kann die Speichereinheit 37 des Lichtmoduls 15 entfallen und ein Speicher ausschließlich in der Steuereinheit 19 vorgesehen sein.

Wie im Einleitungsteil erwähnt, ist ein Gestensensor zur Erkennung z.B. von Hand- oder Fingerbewegungen, wie in der Figur dargestellt, nicht zwingend und insofern nur als Beispiel zu verstehen. Die Gestensteuerung kann z.B. nur durch "Maschinengesten", also Bewegungen der Maschine 10 als Ganzes im Raum, erfolgen, wofür eine in die Maschine integrierte, einen oder mehrere gleichartige oder unterschiedliche Sensoren umfassende Beschleunigungs-, Bewegungs- und/oder Lagesensorik genügt und "externe" Bewegungen relativ zur Maschine 10 nicht erforderlich sind.

Wie im Einleitungsteil ebenfalls bereits erwähnt, kann der hier beispielhaft dargestellte Gestensensor 23 grundsätzlich beliebig ausgebildet sein und beispielsweise berührungslos funktionieren oder berührungsempfindlich sein. Wenn der Gestensensor 23 berührungslos arbeitet, kann er so ausgebildet sein, dass er auf Bewegungen von Körperteilen eines Menschen, beispielsweise wie dargestellt einer Hand 21, reagiert. Alternativ kann der Gestensensor beispielsweise so ausgebildet sein, dass er z.B. wie bei Mobiltelefonen auf Wischgesten reagiert, die der Benutzer mit der Hand oder mit einem Finger ausführt. Hierzu kann der Gestensensor 23 beispielsweise einen Touchscreen umfassen. In die erwähnte Software der Steuereinheit 19 oder des Lichtmoduls 15 sind Algorithmen implementiert, die anhand der Signale des Gestensensors 23 oder anhand von darauf basierenden Daten vorgegebene Gesten erkennen und zwischen diesen unterscheiden kann, so dass die Steuereinheit 19 hierauf reagieren und wiederum in vorgegebener Weise eine durch die jeweilige Geste gewünschte Funktion auslösen kann.

Die Programmierung kann beispielsweise derart ausgebildet sein, dass der Benutzer durch eine Handbewegung in der Nähe des Gestensensors 23 die Lichtquelle 17 einschalten und bei eingeschalteter Lichtquelle 17 durch die gleiche Handbewegung oder durch eine andere Handbewegung die Lichtquelle 17 wieder ausschalten kann. Ferner kann durch Gestensteuerung beispielsweise ein Beleuchtungszustand mit einer reduzierten Beleuchtungsintensität eingestellt werden.

Verschiedene Betriebszustände der Maschine 10 können in die Gestensteuerung mit einbezogen werden und beispielsweise die Gestensteuerung entweder generell oder nur teilweise ermöglichen oder unterbinden.

Eine mögliche Funktionalität der Maschine 10 kann beispielsweise wie folgt ausgestaltet sein: Die Lichtquelle 17 ist immer eingeschaltet, wenn ein zumindest teilweise geladener Akkupack 31 eingesteckt ist, sich die Maschine 10 in der normalen Orientierung "Auf dem Tisch" befindet und der Elektromotor 13 eingeschaltet ist. Wird die Maschine 10 in die um 180° gedrehte Position "Unter dem Tisch" überführt, was beispielsweise durch den Lagesensor 25 erkannt wird, wird die Lichtquelle 17 automatisch ausgeschaltet. Durch Gestensteuerung kann die Lichtquelle 17 eingeschaltet und ausgeschaltet werden, allerdings nur, wenn ein zumindest teilweise geladener Akkupack 31 eingesteckt ist, der Elektromotor 13 ausgeschaltet ist und sich die Maschine 10 in der um 180° gedrehten Orientierung "Unter dem Tisch" befindet.

Als steuernde Geste kann eine Hand- oder Fingerbewegung in der Nähe des Gestensensors 23 - wie in der Figur dargestellt - oder, wenn kein derartiger Sensor eingesetzt werden soll, eine Bewegung oder ein Bewegungsmuster der Maschine 10 vorgesehen sein. Eine Geste in Form eines Bewegungsmusters kann z.B. darin bestehen, dass innerhalb eines vorgegebenen Zeitfensters zwei bestimmte, z.B. entgegengesetzt gerichtete oder auch gleiche, Bewegungen mit der Maschine ausgeführt werden, z.B. ein Verdrehen um 90° um eine beispielsweise vertikale Achse oder um die Längsachse ("Rollbewegung") der Maschine und anschließend ein Zurückdrehen in die Ausgangslage, die beim normalen Arbeiten der Maschine nicht oder jedenfalls nicht in dem jeweiligen Muster auftreten und so vergleichsweise einfach von der Software eindeutig als Geste erkannt werden können.

Handelt es sich um eine Maschine mit Netzbetrieb, gelten diese "Regeln" analog, wobei ein eingesteckter bzw. entfernter Akku 31 einem eingesteckten bzw. herausgezogenen Netzstecker entspricht.

Bei Erfüllung jeweiliger vorgegebener Bedingungen kann durch eine vorgegebene Geste die Lichtquelle 17 entweder ganz ausgeschaltet oder auf einen bestimmten Bruchteil, beispielsweise 15%, der maximalen Lichtstärke gedimmt werden. Alternativ können zwei unterschiedliche Gesten vorgegeben sein, wobei die eine Geste die Lichtquelle 17 vollständig ausschaltet und die andere Geste die Lichtquelle 17 auf eine vorgegebene reduzierte Lichtstärke dimmt.

Eine weitere Funktionalität der Maschine 10 kann darin bestehen, dass ein durch Gestensteuerung bewirkter Zustand der Lichtquelle 17 solange eingestellt, d.h. gespeichert bleibt, wie der Akkupack 31 eingesteckt ist. Wird der Akkupack 31 entfernt, wird das Lichtmodul 15 auf einen definierten Ausgangszustand zurückgesetzt, der - wie vorstehend erwähnt - zum Beispiel darin bestehen, dass bei Orientierung der Maschine 10 "Auf dem Tisch" die Lichtquelle 17 eingeschaltet und bei Orientierung "Unter dem Tisch" ausgeschaltet ist.

Die durch die Gestensteuerung erzielbare oder beeinflussbare Funktionalität einer jeweiligen Maschine kann grundsätzlich beliebig simpel oder beliebig komplex einfach durch entsprechende Programmierung in Abhängigkeit von der jeweils vorhandenen Sensorik der Maschine ausgestaltet sein und sich an den Bedürfnissen des Benutzers orientieren. Zudem kann vorgesehen sein, dass die Maschine so ausgestaltet ist, dass der Benutzer die Möglichkeit hat, die Funktionalität selbst zu ändern, indem z.B. mittels eines USB-Stick oder über das Internet die Software angepasst oder durch eine andere Software ersetzt wird, beispielsweise wie bei einem Firmware-Update.

### Bezugszeichenliste

- 10: Maschine, Stichsäge
- 11: Werkzeug, Sägeblatt
- 13: Elektromotor
- 15: Lichtmodul
- 17: Lichtquelle, LEDs
- 19: Steuereinheit
- 21: Körperteil, Hand
- 23: Gestensensor
- 25: Lagesensor
- 27: Beschleunigungssensor
- 29: Steckplatz
- 31: wiederaufladbare Batterie, Akkupack
- 33: Grundplatte
- 35: Gehäuse
- 37: Speichereinheit
- 39: Schalter
- 41: Werkzeugaufnahme

## Patentansprüche

1. Handwerkzeugmaschine,
mit einem Werkzeug (11) und einem Elektromotor (13) zum Antreiben des Werkzeugs (11),
einem Gehäuse (35) und
mit einem an der Maschine (10) angebrachten Lichtmodul (15), das wenigstens eine Lichtquelle (17) zum Beleuchten eines Arbeitsbereiches aufweist, wobei das Lichtmodul (15) für eine Gestensteuerung ausgebildet ist,
wobei die Maschine (10) eine programmierbare Steuereinheit (19) umfasst, die zur Erkennung von Gesten und zur Ansteuerung des Lichtmoduls (15) in Abhängigkeit von erkannten Gesten ausgebildet ist,
**dadurch gekennzeichnet, dass** die Steuereinheit (19) dazu ausgebildet ist, ein ein- oder mehrmaliges Schlagen oder Klopfen auf die Außenseite des Gehäuses (35) als Geste zum Ansteuern des Lichtmoduls (15) und somit zum Verändern des Zustands der Lichtquelle (17) des Lichtmoduls (15) zu erkennen.

2. Handwerkzeugmaschine nach Anspruch 1,
wobei durch die Gestensteuerung die Lichtquelle (17) einschaltbar und ausschaltbar und/oder dimmbar ist.

3. Handwerkzeugmaschine nach Anspruch 1 oder 2,
wobei die Steuereinheit (19) in das Lichtmodul integriert oder separat von dem Lichtmodul (15) an der Maschine (10) angeordnet ist.

4. Handwerkzeugmaschine nach einem der vorhergehenden Ansprüche, wobei die Steuereinheit (19) zur Erkennung einer oder mehrerer unterschiedlicher Gesten in Form von Bewegungen der ganzen Maschine (10) im Raum und/oder in Form von Bewegungen eines Körperteils (21) eines Menschen relativ zur Maschine (10) und/oder in Form von, insbesondere durch mechanische Einwirkungen auf einen oder mehrere äußere Bestandteile (35) der Maschine (10) hervorgerufenen, Beschleunigungen der Maschine (10) und/oder in Form von mechanischen Schwingungen, insbesondere Schallwellen, ausgebildet ist.

5. Handwerkzeugmaschine nach einem der vorhergehenden Ansprüche, wobei die Steuereinheit (19) zur Erkennung unterschiedlicher Lagen der Maschine (10) im Raum ausgebildet ist.

6. Handwerkzeugmaschine nach einem der vorhergehenden Ansprüche, wobei die Maschine (10), insbesondere eine zur Erkennung von Gesten und zur Ansteuerung des Lichtmoduls (15) in Abhängigkeit von erkannten Gesten ausgebildete Steuereinheit (19) der Maschine (10), zumindest einen Sensor (23, 25, 27) zur Gesten- und/oder Lageerkennung umfasst, der vorzugsweise in das Lichtmodul (15) oder in die Steuereinheit (19) integriert ist.

7. Handwerkzeugmaschine nach Anspruch 6,
wobei der Sensor ein Gestensensor (23), ein Lagesensor (25) oder ein Beschleunigungssensor (27) ist, und/oder wobei der Sensor zum Erfassen von mechanischen Schwingungen, insbesondere von Schallwellen, ausgebildet ist.

8. Handwerkzeugmaschine nach einem der vorhergehenden Ansprüche, wobei die Maschine (10) eine Mehrzahl von unterschiedlichen Sensoren (23, 25, 27) zur Gesten- und/oder Lageerkennung umfasst, die vorzugsweise jeweils in das Lichtmodul (15) oder in die Steuereinheit (19) integriert sind.

9. Handwerkzeugmaschine nach einem der vorhergehenden Ansprüche, wobei die Maschine (10) einen Steckplatz (29) für eine entnehmbare wiederaufladbare Batterie (31), insbesondere einen Akkupack, aufweist.

10. Handwerkzeugmaschine nach einem der vorhergehenden Ansprüche, wobei die Steuereinheit (19) dazu ausgebildet ist, in Abhängigkeit von einem jeweiligen Betriebszustand der Maschine (10) die Gestensteuerung generell entweder zu ermöglichen oder zu unterbinden oder die Gestensteuerung auf eine oder mehrere vorgegebene oder vorgebbare Gesten zu beschränken.

11. Handwerkzeugmaschine nach einem der vorhergehenden Ansprüche, wobei das Lichtmodul (15) dazu ausgebildet ist, einen durch Gestensteuerung eingestellten Beleuchtungszustand zu speichern, solange die Maschine (10) mit einem Stromnetz verbunden und/oder eine wiederaufladbare Batterie (31) an die Maschine (10) angesteckt ist, und in einen vorgegebenen oder vorgebbaren Ausgangszustand zurückzukehren, sobald die Maschine (10) von dem Stromnetz getrennt und/oder die wiederaufladbare Batterie (31) entfernt wird.

12. Handwerkzeugmaschine nach einem der vorhergehenden Ansprüche, wobei die Steuereinheit (19) dazu ausgebildet ist, als Betriebszustand jeweils zu erkennen, ob die Maschine (10) eine vorgegebene oder vorgebbare Lage im Raum einnimmt, ob der Elektromotor (13) eingeschaltet oder ausgeschaltet ist, ob die Maschine (10) mit einem Stromnetz verbunden oder von dem Stromnetz getrennt ist, und/oder ob eine wiederaufladbare Batterie (31) an die Maschine (10) angesteckt oder entfernt ist.

13. Verfahren zum Ansteuern eines Lichtmoduls (15) einer Handwerkzeugmaschine (10) nach einem der vorhergehenden Ansprüche,
bei dem das Lichtmodul (15) durch eine oder mehrere unterschiedliche Gesten in Form von Bewegungen der ganzen Maschine (10) im Raum und/oder in Form von Bewegungen eines Körperteils (21) eines Menschen relativ zur Maschine (10) angesteuert wird.

14. Verwendung einer Gestensteuerung zum Ansteuern eines Lichtmoduls (15) einer Handwerkzeugmaschine (10) nach einem der Ansprüche 1 bis 13.

## Claims

1. A hand machine tool comprising
a tool (11) and an electric motor (13) for driving the tool (11),
a housing (35), and
a light module (15) which is attached to the machine (10) and which has at least one light source (17) for illuminating a working region,
wherein the light module (15) is configured for a gesture control,
wherein the machine (10) comprises a programmable control unit (19) which is configured to recognize gestures and to control the light module (15) in dependence on recognized gestures,
**characterized in that** the control unit (19) is configured to recognize a single or multiple tapping or knocking at the outer side of the housing (35) as a gesture for controlling the light module (15) and thus for changing the state of the light source (17) of the light module (15).

2. A hand machine tool according to claim 1,
wherein the light source (17) can be switched on and off and/or dimmed by the gesture control.

3. A hand machine tool according to claim 1 or 2,
wherein the control unit (19) is integrated into the light module or arranged separately from the light module (15) at the machine (10).

4. A hand machine tool according to any one of the preceding claims,
wherein the control unit (19) is configured to recognize one or more different gestures in the form of movements of the entire machine (10) in space and/or in the form of movements of a body part (21) of a human relative to the machine (10) and/or in the form of accelerations of the machine (10), which are in particular caused by mechanical effects on one or more external components (35) of the machine (10), and/or in the form of mechanical vibrations, in particular sound waves.

5. A hand machine tool according to any one of the preceding claims,
wherein the control unit (19) is configured to recognize different positions of the machine (10) in space.

6. A hand machine tool according to any one of the preceding claims,
wherein the machine (10), in particular a control unit (19) of the machine (10) configured to recognize gestures and to control the light module (15) in dependence on recognized gestures, comprises at least one sensor (23, 25, 27) for gesture and/or position recognition which is preferably integrated into the light module (15) or into the control unit (19).

7. A hand machine tool according to claim 6,
wherein the sensor is a gesture sensor (23), a position sensor (25) or an acceleration sensor (27), and/or wherein the sensor is configured to detect mechanical vibrations, in particular sound waves.

8. A hand machine tool according to any one of the preceding claims,
wherein the machine (10) comprises a plurality of different sensors (23, 25, 27) for gesture and/or position recognition which are preferably each integrated into the light module (15) or into the control unit (19).

9. A hand machine tool according to any one of the preceding claims, wherein the machine (10) has a slot (29) for a removable rechargeable battery (31), in particular a battery pack.

10. A hand machine tool according to any one of the preceding claims, wherein the control unit (19) is configured, depending on a respective operating state of the machine (10), to either generally enable or suppress the gesture control or to restrict the gesture control to one or more predefined or predefinable gestures.

11. A hand machine tool according to any one of the preceding claims,
wherein the light module (15) is configured to store an illumination state set by a gesture control as long as the machine (10) is connected to a power grid and/or a rechargeable battery (31) is plugged to the machine (10), and to return to a predefined or predefinable starting state as soon as the machine (10) is disconnected from the power grid and/or the rechargeable battery (31) is removed.

12. A hand machine tool according to any one of the preceding claims,
wherein the control unit (19) is configured to recognize as an operating state in each case whether the machine (10) adopts a predefined or predefinable position in space, whether the electric motor (13) is switched on or off, whether the machine (10) is connected to a power grid or disconnected from the power grid, and/or whether a rechargeable battery (31) is plugged to or removed from the machine (10).

13. A method for controlling a light module (15) of a hand machine tool (10) according to any one of the preceding claims,
in which the light module (15) is controlled by one or more different gestures in the form of movements of the entire machine (10) in space and/or in the form of movements of a body part (21) of a human relative to the machine (10).

14. Use of a gesture control for controlling a light module (15) of a hand machine tool (10) according to any one of the claims 1 to 13.

## Revendications

1. Machine-outil portative,
comprenant un outil (11) et un moteur électrique (13) destiné à entraîner l'outil (11),
un boîtier (35), et
un module d'éclairage (15) monté sur la machine (10), qui présente au moins une source lumineuse (17) destinée à éclairer une zone de travail, le module d'éclairage (15) étant conçu pour une commande gestuelle,
la machine (10) comprenant une unité de commande programmable (19) conçue pour reconnaître des gestes et pour piloter le module d'éclairage (15) en fonction des gestes reconnus,
**caractérisée en ce que**
l'unité de commande (19) est conçue pour reconnaître un coup ou un tapotement donné une ou plusieurs fois sur la face extérieure du boîtier (35) en tant que geste permettant de piloter le module d'éclairage (15) et donc de modifier l'état de la source lumineuse (17) du module d'éclairage (15).

2. Machine-outil portative selon la revendication 1,
dans laquelle la commande gestuelle permet d'allumer et d'éteindre la source lumineuse (17) et/ou de faire varier son intensité.

3. Machine-outil portative selon la revendication 1 ou 2,
dans laquelle l'unité de commande (19) est intégrée dans le module d'éclairage ou est disposée sur la machine (10) séparément du module d'éclairage (15).

4. Machine-outil portative selon l'une des revendications précédentes,
dans laquelle l'unité de commande (19) est conçue pour reconnaître un ou plusieurs gestes différents sous forme de mouvements de l'ensemble de la machine (10) dans l'espace et/ou sous forme de mouvements d'une partie du corps (21) d'un être humain par rapport à la machine (10) et/ou sous forme d'accélérations de la machine (10), provoquées en particulier par des actions mécaniques sur un ou plusieurs composants extérieurs (35) de la machine (10), et/ou sous forme de vibrations mécaniques, en particulier d'ondes sonores.

5. Machine-outil portative selon l'une des revendications précédentes,
dans laquelle l'unité de commande (19) est conçue pour reconnaître différentes positions de la machine (10) dans l'espace.

6. Machine-outil portative selon l'une des revendications précédentes,
dans laquelle la machine (10), en particulier une unité de commande (19) de la machine (10) conçue reconnaître des gestes et pour piloter le module d'éclairage (15) en fonction des gestes reconnus, comprend au moins un capteur (23, 25, 27) destiné à reconnaître des gestes et/ou des positions, qui est de préférence intégré dans le module d'éclairage (15) ou dans l'unité de commande (19).

7. Machine-outil portative selon la revendication 6,
dans laquelle le capteur est un capteur de geste (23), un capteur de position (25) ou un capteur d'accélération (27), et/ou le capteur est conçu pour détecter des vibrations mécaniques, en particulier des ondes sonores.

8. Machine-outil portative selon l'une des revendications précédentes,
dans laquelle la machine (10) comprend une pluralité de capteurs différents (23, 25, 27) destinés à reconnaître des gestes et/ou des positions, qui sont de préférence intégrés chacun dans le module d'éclairage (15) ou dans l'unité de commande (19).

9. Machine-outil portative selon l'une des revendications précédentes,
dans laquelle la machine (10) présente un emplacement d'enfichage (29) pour une batterie rechargeable amovible (31), en particulier pour un bloc d'accum ulateurs.

10. Machine-outil portative selon l'une des revendications précédentes,
dans laquelle l'unité de commande (19) est conçue pour, en fonction d'un état de fonctionnement respectif de la machine (10), soit autoriser ou interdire de manière générale la commande gestuelle, soit limiter la commande gestuelle à un ou plusieurs gestes prédéfinis ou prédéfinissables.

11. Machine-outil portative selon l'une des revendications précédentes,
dans laquelle le module d'éclairage (15) est conçu pour mémoriser un état d'éclairage réglé par commande gestuelle tant que la machine (10) est reliée à un réseau électrique et/ou qu'une batterie rechargeable (31) est connectée à la machine (10), et pour revenir à un état initial prédéfini ou prédéfinissable dès que la machine (10) est déconnectée du réseau électrique et/ou que la batterie rechargeable (31) est retirée.

12. Machine-outil portative selon l'une des revendications précédentes,
dans laquelle l'unité de commande (19) est conçue pour reconnaître, en tant qu'état de fonctionnement respectif, si la machine (10) occupe une position prédéfinie ou prédéfinissable dans l'espace, si le moteur électrique (13) est allumé ou éteint, si la machine (10) est reliée à un réseau électrique ou est déconnectée du réseau électrique, et/ou si une batterie rechargeable (31) est connectée à la machine (10) ou en est retirée.

13. Procédé de pilotage d'un module d'éclairage (15) d'une machine-outil portative (10) selon l'une des revendications précédentes,
dans lequel le module d'éclairage (15) est piloté par un ou plusieurs gestes différents sous forme de mouvements de l'ensemble de la machine (10) dans l'espace et/ou sous forme de mouvements d'une partie du corps (21) d'un être humain par rapport à la machine (10).

14. Utilisation d'une commande gestuelle pour piloter un module d'éclairage (15) d'une machine-outil portative (10) selon l'une des revendications 1 à 13.
